# EUROPÄISCHE PATENTSCHRIFT

(11) **EP 2 091 801 B1**
(45) Veröffentlichungstag und Bekanntmachung des Hinweises auf die Patenterteilung: **22.02.2012**
(21) Anmeldenummer: 07857242.7
(22) Anmeldetag: 04.12.2007
(51) Int. Cl.: B62D 3/12

(54) **ZAHNSTANGENLENKUNG**
RACK-AND-PINION STEERING
DIRECTION À CRÉMAILLÈRE

(30) Priorität: 23.12.2006 DE 102006061501
(43) Veröffentlichungstag der Anmeldung: 26.08.2009
(73) Patentinhaber: ZF-Lenksysteme GmbH, 73527 Schwäbisch Gmünd (DE)
(72) Erfinder: FRÖHLICH, Stefan, 73568 Zimmerbach (DE); BUDAKER, Martin, 73540 Heubach (DE); HETZEL, Oliver, 73550 Waldstetten (DE)
(86) Internationale Anmeldenummer: PCT/EP2007/063212
(87) Internationale Veröffentlichungsnummer: WO 2008/077723

(56) Entgegenhaltungen:
- EP-A- 0 047 017
- EP-A- 0 131 674
- CH-A- 523 811
- DE-A- 3 332 483
- FR-A- 1 563 134
- GB-A- 2 169 567
- US-B2- 6 585 074

## Beschreibung

Die Erfindung betrifft eine Zahnstangenlenkung, insbesondere für ein Kraftfahrzeug, nach dem Oberbegriff des Anspruchs 1.

Zahnstangenlenkungen sind hinlänglich und beispielsweise aus "Fahrwerktechnik: Lenkung", J. Reimpell, Vogel-Buchverlag, 1984, S. 70 - 90 bekannt.

Die Zahnstangenlenkung ist im wesentlichen aus einem zylinderförmigen Lenkgetriebegehäuse gebildet, in dem eine Zahnstange axial verschieblich angeordnet ist. Ein als Ritzel ausgebildetes Ende einer Lenksäule ist mittig oder seitlich, etwa quer zur Längsachse des Lenkggetriebegehäuses in einer Bohrung in das Lenkgetriebegehäuse eingesetzt und über eine Ritzellagerung gelagert. Das Ritzel kämmt mit einer Verzahnung der Zahnstange. Die Zahnstange oder das Ritzel werden mit einem in einer Axialführung des Lenkggetriebegehäuses eingesetzten Druckstück in Anlage aneinander gehalten. An den axialen Enden der Zahnstange sind Spurstangen und Radlenkhebel gelenkig mit der Zahnstange verbunden und werden bei einer Drehung des Ritzels mit der Zahnstange verschoben.

In der GB 2 169 567 A wird eine Zahnstangenlenkung mit einem Ritzel und mit einer Zahnstange, die mit einer variablen Übersetzung aufweisende Verzahnung derart ausgestatteten ist, dass die Profilbezugslinie der Verzahnung der Zahnstange von ihrer Mitte zu ihren axialen Enden eine Überhöhung aufweist und die Zahnstange mit dem Ritzel einen Getriebezug bildet und in einem Lenkgetriebegehäuse axial verschieblich gehalten wird.

Bei den bekannten Zahnstangenlenkungen ist in der axialen Mitte der Verzahnung der Zahnstange der höchste Punkt der Wälzgeraden oder der Profilbezugslinie oder der Kopflinie, wobei der Überhöhungsverlauf zu den axialen Enden der Verzahnung hin gleich bleibt oder abfällt um ein Klemmen der Verzahnung in ihrem Außenbereich durch eingeleitete Lenk- oder Radreaktionskräfte zu vermeiden. Dies hat jedoch zur Folge, dass das Radialspiel an dem Druckstück und damit das Radialspiel der Zahnstange in dem Lenkgetriebegehäuse vergrößert ist, im Vergleich zu einer Mittenposition der Zahnstange in dem Lenkgetriebegehäuse. Es kann als Folge davon zu einem Klappergeräusch bei der Zahnstangenlenkung beim Überfahren einer Nagelreihe kommen weil das Flankenspiel der Verzahnung zwischen dem Ritzel und der Zahnstange zu groß wird.

Der Erfindung liegt die Aufgabe zugrunde, eine Zahnstangenlenkung der gattungsgemäßen Art so weiterzubilden, dass störende Betriebsgeräusche der Zahnstangenlenkung vermieden sind.

Die Aufgabe wird mit einer Zahnstangenlenkung mit den Merkmalen des Anspruchs 1 gelöst.

Dadurch dass die Zahnstange und ihre Verzahnung so gefertigt sind, dass die Wälzgerade, und/oder die Profilbezugslinie und/oder die Kopflinie der Verzahnung der Zahnstange von ihrer Mitte zu ihren axialen Enden eine Überhöhung aufweist, ist eine konstruktive Maßnahme getroffen das Flankenspiel in den Außenbereichen der Verzahnung zu minimieren um ein störendes Betriebsgeräusch zu vermeiden. Die Profilbezugslinie ist die Teilgerade des Bezugsprofils der Zahnstangenverzahnung. Es kommt im Außenbereich der Verzahnung zu den axialen Enden hin zu einer Minimierung des Flankenspiels in der Verzahnung bis hin zu einem Betrieb der Verzahnung unter Pressung, die allerdings durch die Rückstellkräfte der gelenkten Räder oder durch eine etwaige aktive Rückstellung durch einen Aktuator problemlos überwunden werden kann und keinen Einfluss auf das Lenkverhalten des Kraftfahrzeugs hat.

Bevorzugte Ausführungen ergeben sich aus den Unteransprüchen.

Bevorzugt ist die Überhöhung, d.h. ein Anstieg der Profilbezugslinie oder der Kopflinie über die Nulllinie in den positiven Bereich, so gewählt, dass die Zahnstange an ihren Endanschlägen mit minimiertem radialen Spiel geführt ist, aber ein Klemmen bzw. Blockieren verhindert ist.

Die Nuillinie definiert die Lage der Profilbezugslinie oder falls als Bezugsgröße die Kopflinie des Verzahnungsprofils der Zahnstange gewählt ist, die Lage der Kopflinie in der Mitte der Verzahnung. Die Überhöhung ist bevorzugt linear von der Mitte der Verzahnung steigend zu den axialen Enden der Verzahnung der Zahnstange. Die Überhöhung beträgt in einem Ausführungsbeispiel der Zahnstangenlenkung etwa 0,03 mm und verläuft zu beiden Seiten der Verzahnungsmitte zunächst mit Null um ab einem vorgegebenen Abstand von der Mitte anzusteigen.

Die erfindungsgemäße konstruktive Ausgestaltung der Zahnstange eignet sich für Zahnstangen mit Dachprofil oder kreisförmigem Profil.

Die Zahnstangenlenkung lässt sich als elektrische, elektrohydraulische oder hydraulische Hilfskraftlenkung auslegen und in Personenkraftwagen oder Nutzkraftwagen einsetzen.

### Bezugszeichenliste

- - 1: Zahnstangenlenkung
- - 2: Lenkgetriebegehäuse
- - 3: Ritzel
- - 4: Zahnstange
- - 5: Verzahnung
- - 6: Profilbezugslinie
- - 7: Kopflinie
- - 8: Mitte, v. 5
- - 9.9': Ende, v. 5
- - 10: Nulllinie
- - 11: Dachprofil
- - 12: Profil, kreisförmig
- - 13: Längsachse, v. 2
- - 14: Druckstück
- - 15: Anpressvorrichtung
- - 16: Bohrung
- - 17: Druckfeder
- - 18: Gleitfläche, halbkreisförmig
- - 19: Gleitfläche, dachförmig
- - 20: Druckstückboden
- - 21: Deckel
- - 22: Profilbezugslinie, Stand der Technik

- - h: Überhöhung
- - a: Abstand

Die Erfindung wird nun näher anhand eines Ausführungsbeispiels beschrieben und anhand der beiliegenden Zeichnung wiedergegeben.
- Fig. 1: zeigt einen schematischen Längsschnitt durch eine erfindungsgemäße Zahnstangenlenkung,
- Fig. 2: zeigt einen Überhöhungsverlauf einer erfindungsgemäßen Zahnstange in einer Zahnstangenlenkung verglichen mit einem Überhöhungsvenauf einer Zahnstange nach dem Stand der Technik,
- Fig. 3: zeigt einen Querschnitt durch eine Zahnstange mit Dachprofil,
- Fig. 4: zeigt einen Querschnitt durch eine Zahnstange mit kreisförmigem Profil.

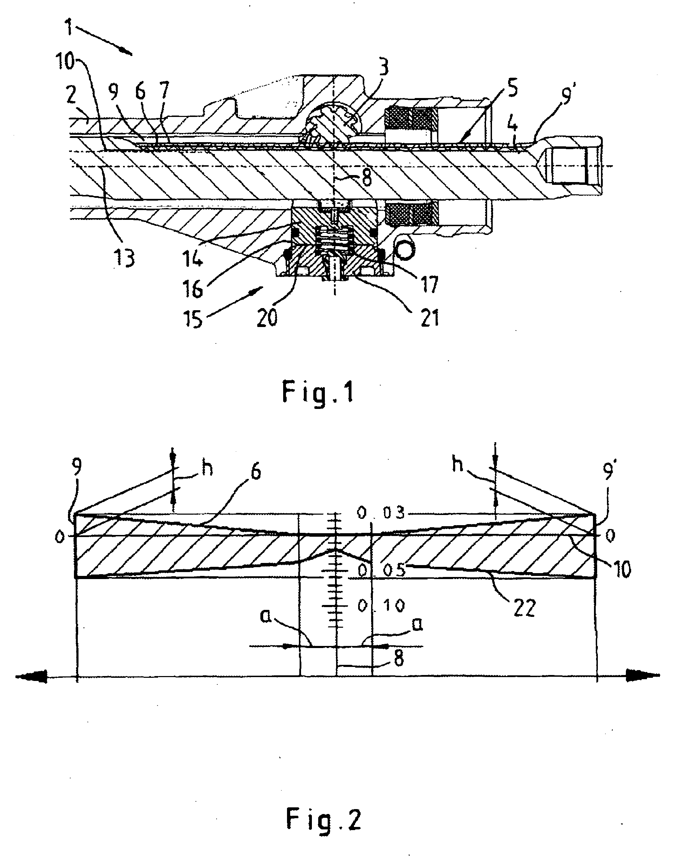

In Fig. 1 ist in einem teilweisen schematischen Längsschnitt eine Zahnstangenlenkung 1 für einen Personenkraftwagen gezeigt. Wesentliche Teile der Zahnstangenlenkung 1 sind ein Lenkgetriebegehäuse 2 das ein Ritzel 3 etwa quer zu seiner Längsachse 13 aufnimmt. Das Ritzel 3 ist mit einer Verzahnung 5 (Planverzahnung) einer axial verschieblich in dem Lenkgetriebegehäuse 2 gelagerten Zahnstange 4 im Eingriff. Das Ritzel 3 ist unverschieblich in ein oder mehreren Lagern in dem Lenkgetriebegehäuse 2 gehalten.

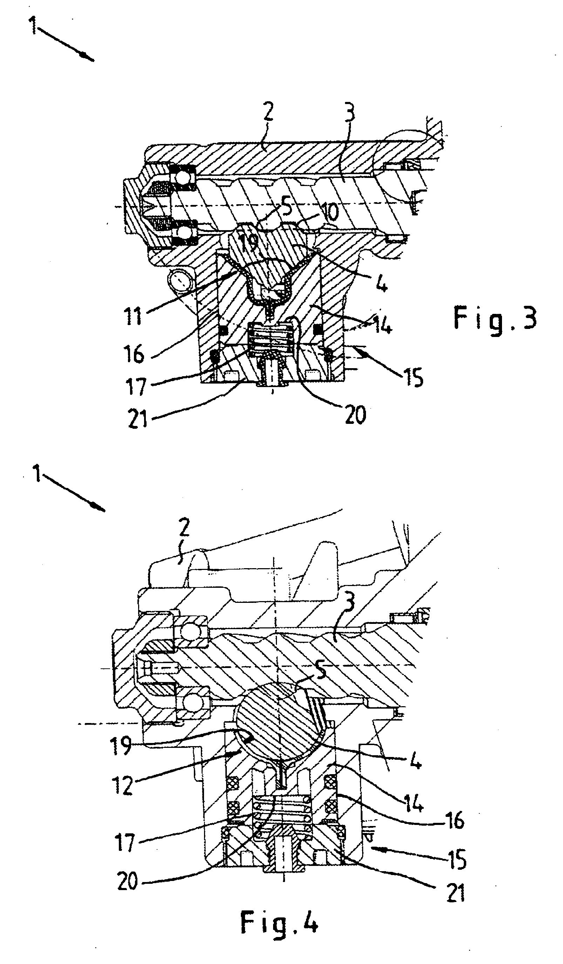

Ein Druckstück 14 einer Anpressvorrichtung 15 ist entlang einer quer zu der Längsachse 13 des Lenkgetriebegehäuses 2 angeordneten zylinderförmigen Bohrung 16 in dem Lenkgetriebegehäuse 2 axial verschieblich geführt. Das Druckstück 14 presst unter Beaufschlagung einer Druckfeder 17 mit einer im Querschnitt halbkreisförmigen Gleitfläche 18 (vgl. Fig. 4) oder einer im Querschnitt dach- oder prismenförmigen Gleitfläche 19 (vgl. Fig. 3) auf die Zahnstange 4 und hält deren Verzahnung 5 in Eingriff mit der Verzahnung des Ritzels 3. Die Druckfeder 17 stützt sich zwischen einem Druckstückboden 20 und einem, die Bohrung 16 nach außen abschließenden Deckel 21 ab.

Die Verzahnung 5, die als Evolventen-Planverzahnung ausgebildet sein kann, weist, wie Fig. 2 in einer vergrößerten schematischen Darstellung der interessierenden geometrischen Verzahnungseigenschaften der Verzahnung 5 zeigt, eine in der Art einer Nulllinie 10 verlaufenden, geraden theoretischen Profilbezugslinie 6 auf. Die geometrischen Verhältnisse können auch von einer theoretischen Kopflinie 7 der Verzahnung 5 als Nulllinie 10 oder einer Fußlinie der Verzahnung 5 ausgehen. Die tatsächliche, erfindungsgemäße Profilbezugslinie 6 und/oder Kopflinie 7 der Verzahnung 5 ist allerdings in dem gezeigten Ausführungsbeispiel in den Figuren 1 bis 4 mit einer Überhöhung h versehen, d.h. die Profilbezugslinie 6 und/oder die Kopflinie 7 der Verzahnung steigen zu beiden Enden 9, 9' der Verzahnung 5 von der Mitte 8 an.

Im Stand der Technik, wie ihn die Profilbezugslinie 22 zeigt, fällt die Profilbezugslinie 22 zu den axialen Enden 9, 9' ab.

Wie Fig. 2 zeigt erfolgt der Anstieg der Profilbezugslinie 6 oder Kopflinie 7 linear ab einem Abstand a zu beiden Seiten der Mitte 8. Der Abstand a kann einen Rollwinkel des Ritzels 3 von 90° entsprechen.

Die maximale Überhöhung h beträgt in dem gezeigten Ausführungsbeispiel etwa 0,03 mm.

Die Figuren 3 und 4 zeigen geeignete Querschnittsformen von Zahnstangen. In Fig. 3 ist ein Dachprofil 11 eines Zahnstangenquerschnitts gezeigt. In Fig. 4 ein kreisförmiges Profil 12 eines Zahnstangenquerschnitts. Für gleiche Bauteile gelten dieselben Bezugszeichen wie in den Figuren 1 und 2.

## Patentansprüche

1. Zahnstangenlenkung, insbesondere für ein Kraftfahrzeug, mit einem Lenkgetriebegehäuse (2) und einem Ritzel (3), das in dem Lenkgetriebegehäuse (2) gelagert ist, und mit einer Zahnstange (4), die mit ihrer Verzahnung (5) mit dem Ritzel (3) einen Getriebezug bildet und in dem Lenkgetriebegehäuse (2) axial verschieblich gehalten ist, wobei die Profilbezugslinie (6) und/oder die Kopflinie (7) der Verzahnung (5) der Zahnstange (4) von ihrer Mitte (8) zu ihren axialen Enden (9, 9') eine Überhöhung (h) aufweist, **dadurch gekennzeichnet, dass** die Überhöhung (h) etwa 0,03 mm ist, so dass die Zahnstange (4) im Vergleich zur Mitte der Verzahnung (5) an ihren Endanschlägen mit minimiertem radialem Spiel geführt ist.

2. Zahnstangenlenkung nach Anspruch 1, **dadurch gekennzeichnet, dass** die Überhöhung (h) relativ zu einer Nulllinie (10) an der Mitte (8) der Verzahnung (5) ist.

3. Zahnstangenlenkung nach einem der Ansprüche 1 bis 2, **dadurch gekennzeichnet, dass** die Überhöhung (h) linear von der Mitte (8) der Verzahnung (5) zu den axialen Enden (9, 9') der Verzahnung (5) verläuft. 3

4. Zahnstangenlenkung nach einem der Ansprüche 1 bis 3, **dadurch gekennzeichnet, dass** die Überhöhung (h) mit Abstand (a) zu beiden Seiten der Mitte (8) Null ist und dann ansteigt.

5. Zahnstangenlenkung nach einem der Ansprüche 1 bis 4, **dadurch gekennzeichnet, dass** die Zahnstange (4) ein Dachprofil (11) oder ein kreisförmiges Profil (12) aufweist.

6. Zahnstangenlenkung nach einem der Ansprüche 1 bis 5, **dadurch gekennzeichnet, dass** die Zahnstangenlenkung (1) eine elektrische oder elektrohydraulische oder eine hydraulische Hilfskraftlenkung ist.

7. Personenkraftwagen oder Nutzkraftwagen mit einer Zahnstangenlenkung nach einem der Ansprüche 1 bis 6.

## Claims

1. Rack-and-pinion steering system, in particular for a motor vehicle, having a steering gear housing (2) and a pinion (3) which is mounted in the steering gear housing (2), and having a rack (4) which, by way of its toothing (5), forms a gear train with the pinion (3) and is held axially displaceably in the steering gear housing (2), the profile reference line (6) and/or the tip line (7) of the toothing (5) of the rack (4) having an elevation (h) from its centre (8) to its axial ends (9, 9'), **characterized in that** the elevation (h) is approximately 0.03 mm, with the result that the rack (4) is guided at its end stops with minimized radial play in comparison with the centre of the toothing (5).

2. Rack-and-pinion steering system according to Claim 1, **characterized in that** the elevation (h) is relative to a zero line (10) at the centre (8) of the toothing (5).

3. Rack-and-pinion steering system according to either of Claims 1 and 2, **characterized in that** the elevation (h) extends linearly from the centre (8) of the toothing (5) to the axial ends (9, 9') of the toothing (5).

4. Rack-and-pinion steering system according to one of Claims 1 to 3, **characterized in that** the elevation (h) is zero at a spacing (a) on both sides of the centre (8) and then rises.

5. Rack-and-pinion steering system according to one of Claims 1 to 4, **characterized in that** the rack (4) has a roof profile (11) or a circular profile (12).

6. Rack-and-pinion steering system according to one of Claims 1 to 5, **characterized in that** the rack-and-pinion steering system (1) is an electric or electrohydraulic or hydraulic power steering system.

7. Passenger car or commercial vehicle having a rack-and-pinion steering system according to one of Claims 1 to 6.

## Revendications

1. Direction à crémaillère, en particulier pour un véhicule automobile, comprenant un boîtier de mécanisme de direction (2) et un pignon (3), qui est monté dans le boîtier de mécanisme de direction (2), et une crémaillère (4), qui forme avec sa denture (5) un train d'engrenages avec le pignon (3) et qui est maintenue de façon mobile axialement dans le boîtier de mécanisme de direction (2), dans laquelle la ligne de référence de profil (6) et/ou la ligne de tête (7) de la denture (5) de la crémaillère (4) présente une surélévation (h) depuis son milieu (8) jusqu'à ses extrémités axiales (9, 9'), **caractérisée en ce que** la surélévation (h) vaut environ 0,03 mm, de telle manière que la crémaillère (4) soit guidée avec un jeu radial minimisé à ses butées d'extrémité par comparaison avec le milieu de la denture (5).

2. Direction à crémaillère selon la revendication 1, **caractérisée en ce que** la surélévation (h) est prise par rapport à une ligne de zéro (10) au milieu (8) de la denture (5).

3. Direction à crémaillère selon l'une quelconque des revendications 1 à 2, **caractérisée en ce que** la surélévation (h) s'étend linéairement depuis le milieu (8) de la denture (5) jusqu'aux extrémités axiales (9, 9') de la denture (5).

4. Direction à crémaillère selon l'une quelconque des revendications 1 à 3, **caractérisée en ce que** la surélévation (h) est nulle sur une distance (a) de part et d'autre du milieu (8) et augmente ensuite.

5. Direction à crémaillère selon l'une quelconque des revendications 1 à 4, **caractérisée en ce que** la crémaillère (4) présente un profil en forme de toit (11) ou un profil circulaire (12).

6. Direction à crémaillère selon l'une quelconque des revendications 1 à 5, **caractérisée en ce que** la direction à crémaillère (1) est une direction assistée électrique ou électrohydraulique ou hydraulique.

7. Voiture automobile ou véhicule automobile utilitaire avec une direction à crémaillère selon l'une quelconque des revendications 1 à 6.
